# FASCICULE DE BREVET EUROPEEN

(11) **EP 3 763 503 B1**
(45) Date de publication et mention de la délivrance du brevet: **05.04.2023**
(21) Numéro de dépôt: 20183447.0
(22) Date de dépôt: 01.07.2020
(51) Int. Cl.: B29C 44/58, B22C 7/02, B29C 35/04, B29C 33/76, B29C 44/34, B29C 44/42

(54) **MOULE D'INJECTION DE POLYSTYRENE EXPANSE POUR LA REALISATION D'UN ELEMENT CREUX**
EPS-EINSPRITZFORM ZUR HERSTELLUNG EINES HOHLELEMENTS
MOULD FOR INJECTION OF EXPANDED POLYSTYRENE FOR FORMING A HOLLOW ELEMENT

(30) Priorité: 08.07.2019 FR 1907593
(43) Date de publication de la demande: 13.01.2021
(73) Titulaire: PSA Automobiles SA, 78300 Poissy (FR); Storopack Hans Reichenecker GmbH, 72555 Metzingen (DE)
(72) Inventeur: DUFLOUX, MARIO, 08230 SEVIGNY LA FORET (FR); VOISIN, Julien, 44521 OUDON (FR)

(56) Documents cités:
- EP-A1- 0 305 653
- EP-A2- 0 913 240
- DE-A1-102008 040 873
- DE-A1-102009 004 386
- DE-A1-102017 111 846
- GB-A- 1 261 718
- US-A1- 2010 193 985

## Description

La présente invention concerne un moule de moulage par injection d'une forme creuse en polystyrène expansé, ainsi qu'un procédé mettant en oeuvre un tel moule, et un modèle de fonderie obtenu avec un tel procédé.

Le polystyrène expansé, ou « PSE » en abrégé, est une mousse de faible densité formant des perles ou granulés agglomérés, obtenue par polymérisation du styrène monomère donnant un polymère alvéolaire. On injecte dans un moule le polystyrène ayant subi un début d'expansion avec de la vapeur d'eau, puis on délivre un flux de vapeur d'eau dans ce moule traversant l'élément formé pour finir l'action de gonflement des perles qui se collent les unes aux autres en remplissant entièrement le moule de manière uniforme.

En particulier, il est connu par exemple du document GB1261718A qui divulgue un moule selon la préambule de la revendication 1 et un procédé selon la préambule de la revendication 5, de réaliser l'injection dans un moule s'ouvrant en deux côtés, chaque côté comprenant des canaux d'alimentation en vapeur d'eau, qui débouchent sur les surfaces de la forme par des filtres répartis sur ces surfaces.

On réalise ensuite une arrivée de vapeur d'eau sur un premier côté du moule, délivrant la vapeur au travers d'un filtre pour traverser l'élément le plus uniformément possible, et ressortir par un deuxième filtre du deuxième côté pour finir par une vanne de drainage en bas de ce côté. Ensuite on inverse l'entrée et la sortie pour faire passer la vapeur d'eau au travers de l'élément dans l'autre direction, afin d'exposer chaque côté de l'élément à l'arrivée de vapeur chaude, et obtenir la meilleure homogénéité de traitement du volume complet donnant une soudure des perles entre elles.

En particulier on utilise des éléments moulés en polystyrène expansé pour réaliser des moulages de métaux en alliage d'aluminium ou ferreux à modèles perdus. Pour cela on peut assembler plusieurs éléments pour constituer une grappe formant un modèle comprenant des canaux de coulage du métal en fusion, puis on effectue une enduction par immersion de cette grappe avec un matériau réfractaire formant une couche protectrice. La grappe est ajustée dans un cadre qui est ensuite rempli de sable fluide compacté par vibrations, puis on coule le métal par une partie émergeante du système de coulée, dans les canaux pour obtenir par fusion du polystyrène expansé, un remplissage complet des éléments donnant des pièces pouvant présenter des formes complexes, avec une bonne précision géométrique et un état de surface lisse reproduisant celui du modèle. Toutefois pour réaliser des éléments injectés creux, en particulier des cylindres creux comprenant une paroi relativement mince, il est nécessaire de disposer un noyau dans le moule afin de réaliser ce creux dans le polystyrène expansé. Avec un moule suivant l'art antérieur décrit ci-dessus, le flux de vapeur d'eau venant d'un côté ou de l'autre de ce moule, vient alors buter sur le noyau pour le contourner, ce qui donne un manque d'homogénéité au passage du flux entraînant des problèmes de qualité variable du polystyrène expansé, notamment la tenue des perles, et des états de surface.

Il est connu par ailleurs de former un modèle en polystyrène expansé d'une pièce creuse en assemblant plusieurs éléments moulés séparément, afin d'éviter la réalisation d'un élément unique creux. Toutefois cette fabrication est plus longue à réaliser, et plus onéreuse.

La présente invention a notamment pour but d'éviter ces inconvénients de la technique antérieure.

Elle propose à cet effet un moule de moulage par injection d'un élément creux en polystyrène expansé, comportant des côtés pouvant s'ouvrir contenant un volume de moulage formant la surface extérieure de l'élément creux, ce volume de moulage étant équipé de filtres externes de passage de vapeur d'eau répartis sur cette surface extérieure, qui est relié à un premier canal d'alimentation en vapeur d'eau passant dans les côtés, le moule étant remarquable en ce qu'il comporte un noyau disposé dans le volume de moulage, formant la surface intérieure de l'élément creux, qui est équipé de filtres internes de vapeur d'eau répartis sur cette surface intérieure, relié à un deuxième canal d'alimentation en vapeur d'eau passant dans le noyau.

Un avantage du moule selon l'invention est qu'en couvrant les surfaces extérieure et intérieure du volume de moulage par les filtres, qui se trouvent des deux côtés de la paroi de l'élément creux, on obtient un flux de vapeur d'eau dans un sens ou dans l'autre, qui est obligé de traverser la totalité de la paroi. On réalise de manière simple et rapide, en une seule pièce, un élément creux pouvant présenter des parois minces dont l'homogénéité du polystyrène expansé est assurée sur toutes ses parois.

Le moule selon l'invention peut de plus comporter une ou plusieurs des caractéristiques suivantes, qui peuvent être combinées entre elles.

En particulier, le volume de moulage peut présenter une forme tubulaire cylindrique.

Dans ce cas, avantageusement le noyau coulisse dans le moule suivant l'axe du cylindre.

Avantageusement le noyau étant mobile, le deuxième canal d'alimentation comporte une partie coulissante ou télescopique le reliant à ce noyau. L'invention a aussi pour objet un procédé d'utilisation d'un moule d'injection dans lequel après une injection de polystyrène dans le volume de moulage, il réalise une étape suivante comportant des passages de vapeur d'eau d'un canal d'alimentation vers l'autre, successivement dans une direction puis dans l'autre direction, remarquable en ce que le moule d'injection est un moule d'injection selon l'une quelconque des variantes précédemment décrites.

Avantageusement, le procédé réalise une étape suivante comportant une fermeture de vannes de drainage des deux canaux d'alimentation, puis une alimentation de ces deux canaux d'alimentation en vapeur d'eau avec une montée en pression.

Avantageusement, le procédé réalise une étape suivante comportant une alimentation en eau froide de conduits de refroidissement disposés dans les différents côtés du moule.

Avantageusement, le procédé réalise une étape suivante comportant le tirage de vide dans les deux canaux d'alimentation pour une phase de stabilisation de la matière injectée.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est un schéma en coupe axiale d'un moule selon l'invention comprenant deux côtés et un noyau, réalisant un élément tubulaire cylindrique, présentant après l'injection du polystyrène une première étape de passage de vapeur d'eau au travers des parois de l'élément vers l'intérieur ;
[Fig. 2] présente une étape suivante de passage de vapeur d'eau au travers des parois vers l'extérieur ;
[Fig. 3] présente une étape suivante d'autoclave sous pression en phase vapeur de l'élément ;
[Fig. 4] présente une étape suivante de refroidissement de l'élément ; et
[Fig. 5] présente une étape finale de réalisation dans le moule d'un vide de stabilisation de l'élément.

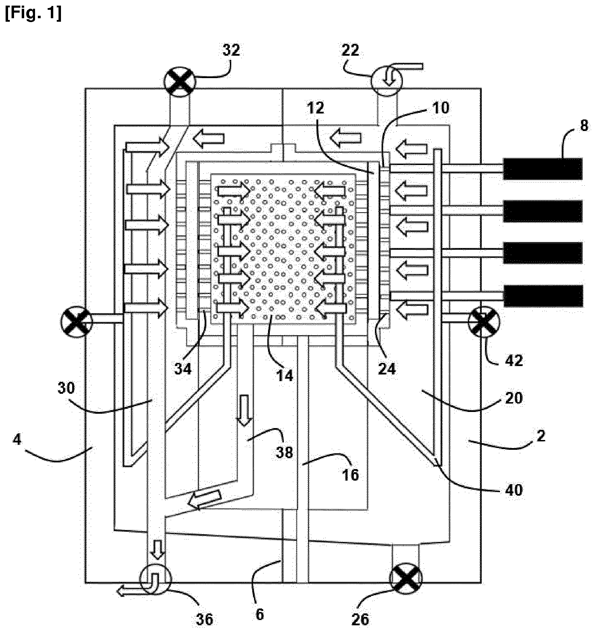

La figure 1 présente un moule comportant une forme globalement symétrique autour d'un plan de joint vertical 6, comprenant à droite un côté fixe 2 et à gauche un côté mobile 4, prévu pour être installé dans une presse serrant fortement les deux côtés l'un sur l'autre.

En variante les côtés fixe et mobile peuvent être inversés, le moule peut aussi comporter deux côtés mobiles.

Le côté fixe 2 comporte des injecteurs 8 assurant le remplissage du polystyrène après avoir fait le vide dans le moule grâce à un tirage de vide par les deux vannes de drainage 26, 36 ouvertes, au travers de perçages d'arrivée matière 10 alimentant un volume intérieur de moulage de forme cylindrique tubulaire, comprenant un axe vertical disposé dans le plan de joint 6, pour réaliser un élément en polystyrène expansé 12 moulé dans ce volume en prenant sa forme.

Un noyau 14 de forme cylindrique disposé au centre du volume de moulage en formant la surface intérieure de l'élément moulé 12, est fixé à une tige de commande coulissant verticalement 16 pour descendre ce noyau avant l'ouverture des deux côtés 2, 4 du moule, et permettre l'évacuation de l'élément moulé après cette ouverture.

Un premier canal d'alimentation en vapeur d'eau 20 comportant une entrée supérieure réalisée dans le côté fixe 2, équipée d'une première vanne d'alimentation 22, contourne l'ensemble du volume de moulage pour déboucher sur des filtres externes 24 répartis uniformément sur la surface de ce volume de moulage formant la surface extérieure de l'élément 12. Une première vanne inférieure de drainage 26 reliée au premier canal d'alimentation 20, est disposée sur le côté fixe 2.

Un deuxième canal d'alimentation en vapeur d'eau 30 comportant une entrée supérieure réalisée dans le côté mobile 4, équipée d'une deuxième vanne d'alimentation 32, descend, puis est reliée par une liaison flexible ou télescopique 38 qui remonte à l'intérieur du noyau 14.

Le deuxième canal d'alimentation 30 débouche sur des filtres internes 34 uniformément répartis sur la surface du noyau 14 formant la surface intérieure de l'élément 12.

Les canaux d'alimentation 20, 30 peuvent prendre toutes formes, en particulier la forme de chambres formées dans le moule.

La liaison flexible ou télescopique 38 permet le coulissement vers le bas du noyau 14 tiré par la tige de commande 16, en suivant ce mouvement sans ouvrir le deuxième canal d'alimentation 30.

Les filtres externes 24 et internes 34 permettent lors de l'injection du polystyrène de maintenir cette matière dans le volume de moulage, sans écoulement vers les deux canaux d'alimentation 20, 30, tout en laissant ensuite passer la vapeur d'eau au travers.

Des conduits de refroidissement 40 répartis sur les deux côtés du moule 2, 4, comportent sur chaque côté une vanne d'entrée d'eau froide 42, et une sortie d'eau réchauffée constituée par les vannes de drainage 26, 36.

Le moulage d'un élément cylindrique creux 12 comporte l'injection de polystyrène par les injecteurs 8, et les perçages d'arrivée matière 10 alimentant le volume de moulage.

Dans une étape suivante présentée figure 1, on ouvre la première vanne d'alimentation 22 de manière à obtenir un flux de vapeur d'eau alimentant le premier canal d'alimentation 20, pour passer de manière uniforme par les filtres externes 24 sur la surface extérieure de l'élément creux 12.

La phase vapeur traverse ensuite entièrement la paroi de l'élément creux 12, puis traverse les filtres internes 34 pour arriver dans une chambre intérieure du noyau 14 où elle commence à se condenser. Le condensat et le reste de vapeur d'eau sont ensuite évacués par le deuxième canal d'alimentation 30, vers la deuxième vanne de drainage 36 pour être évacués à l'extérieur du moule.

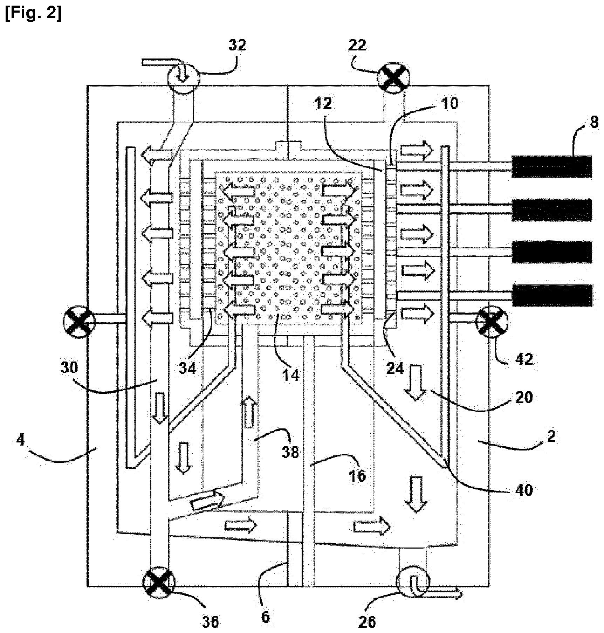

Dans une étape suivante présentée figure 2, on inverse le sens de passage de la vapeur d'eau en fermant la première vanne d'alimentation 22 et la deuxième vanne de drainage 36, puis en ouvrant la deuxième vanne d'alimentation 32 et la première vanne de drainage 26.

On obtient un débit de vapeur d'eau inversé, venant de la chambre intérieure du noyau 14 pour passer au travers des filtres internes 34, qui traverse de l'intérieur vers l'extérieur la paroi de l'élément 12, puis ressort au travers des filtres externes 24 pour être évacué par la première vanne de drainage 26. Les deux passages successifs dans les deux directions de la vapeur d'eau au travers de la paroi de l'élément creux 12, de manière uniforme sur toute la surface de cette paroi, garantissent la soudure des perles de polystyrène expansé en tous points de cette paroi.

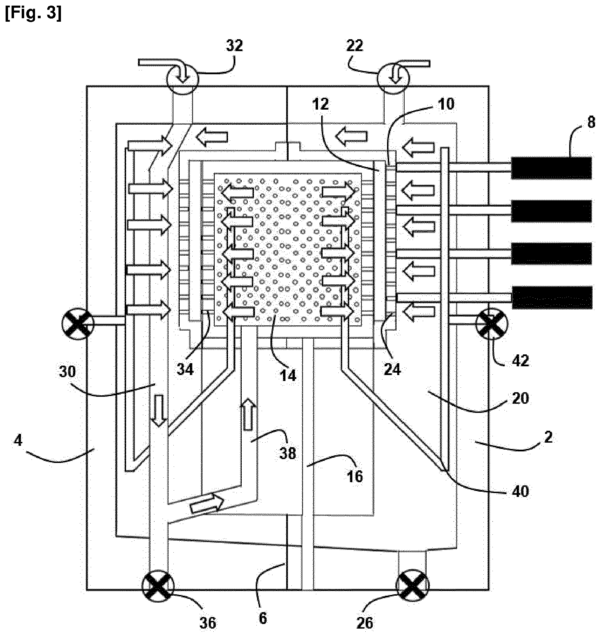

La figure 3 présente une étape suivante de montée en pression de la phase vapeur dans le moule fermé formant un autoclave.

Pour cela les deux vannes de drainage 26, 36 étant fermés, on ouvre les deux vannes d'alimentation 22, 32 ce qui donne une arrivée de vapeur d'eau sous pression sur l'élément 12, à la fois par l'extérieur au travers des filtres externes 24 et par l'intérieur au travers des filtres internes 34.

On obtient une surface complète des deux côtés de la paroi de l'élément creux 12, qui est tendue et lisse.

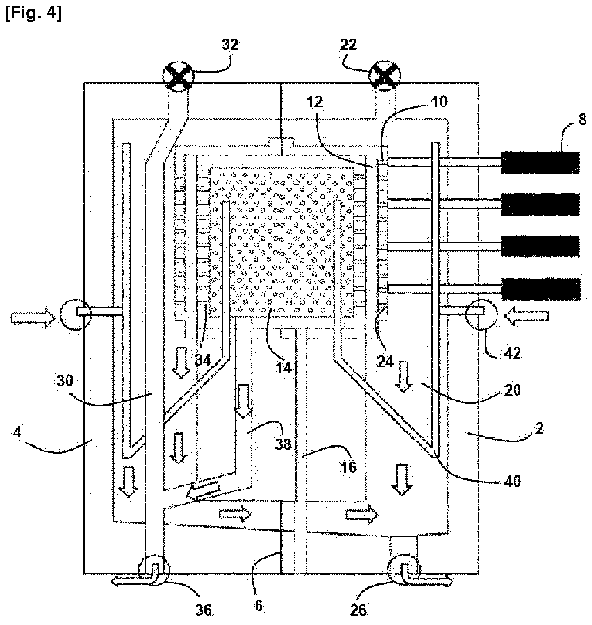

La figure 4 présente une étape suivante de refroidissement du moule et de l'élément creux 12. On ferme les deux vannes d'alimentation 22, 32 et on ouvre les deux vannes de drainage 26, 36, ce qui fait chuter la pression dans les deux canaux d'alimentation 20, 30.

On ouvre aussi les deux vannes d'entrée d'eau froide 42 pour alimenter les conduits de refroidissement 40 des deux côtés 2, 4 du moule, afin de refroidir l'élément creux 12 et stopper l'expansion des perles de polystyrène expansé.

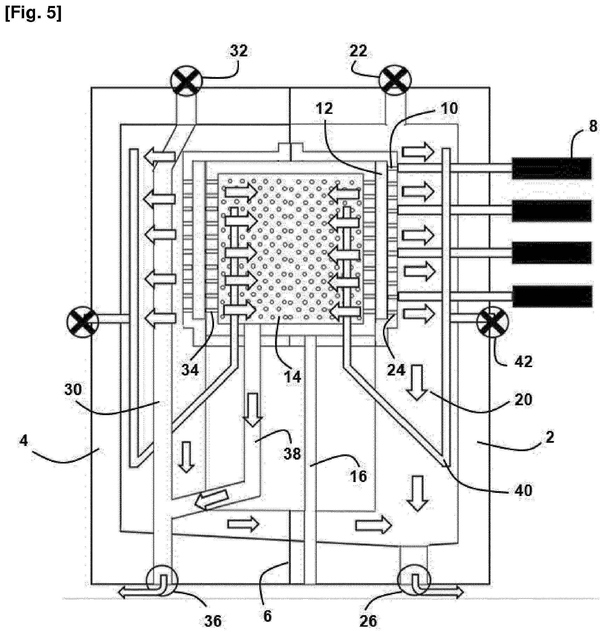

La figure 5 présente une étape suivante comprenant d'abord la fermeture des vannes d'eau de refroidissement 42 une fois la bonne température du moule obtenu.

On forme ensuite un vide de stabilisation dans le moule en réalisant la fermeture des deux vannes d'alimentation 22, 32, puis l'ouverture des deux vannes de drainage 26, 36 qui sont reliées à une pompe à vide mise en oeuvre pour créer une dépression dans le volume de moulage, passant au travers des filtres 24, 34.

Sous l'action du vide l'eau résiduelle dans les cellules alvéolaires des perles du polystyrène expansé est vaporisée, puis évacuée au travers des filtres 24, 34 et sortie par les vannes de drainage 26, 36. Le vide de stabilisation causant l'assèchement du polystyrène expansé, permet d'obtenir une bonne stabilité dimensionnelle de l'élément 12 en évacuant toute l'eau contenue jusqu'au coeur des perles du matériau.

On obtient un élément fini creux 12, pouvant présenter des parois minces, comportant à la fois une homogénéité élevée du matériau, une bonne stabilité dimensionnelle et un état de surface lisse.

On utilise avantageusement l'élément creux 12 pour former de manière rapide et économique un modèle creux en une seule pièce utilisé pour le moulage d'un métal ferreux ou aluminium par modèle perdu, présentant des qualités élevées de géométrie et d'état de surface. On peut en particulier assembler plusieurs modèles creux pour former une grappe, et mouler plusieurs pièces d'un coup.

## Revendications

1. Moule de moulage par injection d'un élément creux en polystyrène expansé (12), comportant des côtés (2, 4) pouvant s'ouvrir contenant un volume de moulage formant la surface extérieure de l'élément creux (12), ce volume de moulage étant équipé de filtres externes de passage de vapeur d'eau (24) répartis sur cette surface extérieure, qui est relié à un premier canal d'alimentation en vapeur d'eau (20) passant dans les côtés (2, 4), **caractérisé en ce qu'**il comporte un noyau (14) disposé dans le volume de moulage, formant la surface intérieure de l'élément creux (12), qui est équipé de filtres internes de vapeur d'eau (34) répartis sur cette surface intérieure, relié à un deuxième canal d'alimentation en vapeur d'eau (30) passant dans le noyau (14).

2. Moule d'injection selon la revendication 1, **caractérisé en ce que** le volume de moulage présent une forme tubulaire cylindrique.

3. Moule d'injection selon la revendication 2, **caractérisé en ce que** le noyau (14) coulisse dans le moule suivant l'axe du cylindre.

4. Moule d'injection selon l'une quelconque des revendications précédentes, **caractérisé en ce que** le noyau (14) étant mobile, le deuxième canal d'alimentation (30) comporte une partie coulissante ou télescopique (38) le reliant à ce noyau (14).

5. Procédé d'utilisation d'un moule d'injection, dans lequel après une injection de polystyrène dans le volume de moulage, il réalise une étape suivante comportant un passage de vapeur d'eau d'un canal d'alimentation (20, 30) vers l'autre, successivement dans une direction puis dans l'autre direction, **caractérisé en ce que** le moule d'injection est un moule d'injection selon l'une quelconque des revendications précédentes.

6. Procédé d'utilisation selon la revendication 5, **caractérisé en ce qu'**il réalise une étape suivante comportant une fermeture de vannes de drainage (26, 36) des deux canaux d'alimentation (20, 30), puis une alimentation de ces deux canaux d'alimentation (20, 30) en vapeur d'eau avec une montée en pression.

7. Procédé d'utilisation selon la revendication 6, **caractérisé en ce qu'**il réalise une étape suivante comportant une alimentation en eau froide de conduits de refroidissement (40) disposés dans les différents côtés du moule (2, 4).

8. Procédé d'utilisation selon la revendication 7, **caractérisé en ce qu'**il réalise une étape suivante comportant le tirage de vide dans les deux canaux d'alimentation (20, 30) pour une phase de stabilisation de la matière injectée.

## Patentansprüche

1. Form zum Spritzgießen eines hohlen Elements aus expandiertem Polystyrol (12), die Seiten (2, 4) aufweist, die geöffnet werden können, und die ein Formvolumen enthält, das die äußere Oberfläche des hohlen Elements (12) bildet, wobei dieses Formvolumen ausgestattet ist über diese Außenfläche verteilte externe Wasserdampf-Durchgangsfilter (24), die mit einem die Seiten (2, 4) durchdringenden ersten Wasserdampf-Zufuhrkanal (20) verbunden sind, **dadurch gekennzeichnet, dass** sie einen darin angeordneten Kern (14) aufweisen Formvolumen, das die Innenfläche des Hohlkörpers (12) bildet, der mit über diese Innenfläche verteilten inneren Wasserdampffiltern (34) ausgestattet ist, die mit einem zweiten Dampfzuführkanal (30) verbunden sind, der durch den Kern (14) verläuft.

2. Spritzgussform nach Anspruch 1, **dadurch gekennzeichnet, dass** das Formvolumen eine zylindrische Rohrform hat.

3. Spritzgussform nach Anspruch 2, **dadurch gekennzeichnet, dass** der Kern (14) in der Form entlang der Achse des Zylinders gleitet.

4. Spritzgussform nach einem der vorangehenden Ansprüche, **dadurch gekennzeichnet, dass** der zweite Versorgungskanal (30) bei beweglichem Kern (14) ein verschiebbares oder teleskopisches Teil (38) umfasst, das ihn mit diesem Kern (14) verbindet.

5. Verfahren zur Verwendung einer Spritzgussform, bei der sie nach dem Einspritzen von Polystyrol in das Formvolumen einen folgenden Schritt durchführt, der einen Durchgang von Wasserdampf von einem Versorgungskanal (20, 30) zu dem anderen umfasst, sukzessive in einer Richtung und dann hinein der anderen Richtung, **dadurch gekennzeichnet, dass** die Spritzgussform eine Spritzgussform nach einem der vorhergehenden Ansprüche ist.

6. Verwendungsverfahren nach Anspruch 5, **dadurch gekennzeichnet, dass** es einen folgenden Schritt ausführt, der das Schließen der Entleerungsventile (26, 36) der zwei Versorgungskanäle (20, 30) und dann die Versorgung dieser beiden Kanäle mit Dampf (20, 30) umfasst mit Druckanstieg.

7. Verwendungsverfahren nach Anspruch 6, **dadurch gekennzeichnet, dass** es einen folgenden Schritt durchführt, der eine Zufuhr von kaltem Wasser zu Kühlkanälen (40) umfasst, die in den verschiedenen Seiten der Form (2, 4) angeordnet sind.

8. Verwendungsverfahren nach Anspruch 7, **dadurch gekennzeichnet, dass** es einen nächsten Schritt durchführt, der das Anlegen eines Vakuums in den beiden Zufuhrkanälen (20, 30) für eine Stabilisierungsphase des eingespritzten Materials umfasst.

## Claims

1. Mold for injection molding of a hollow element of expanded polystyrene (12), comprising sides (2, 4) which can be opened, containing a molding volume forming the outer surface of the hollow element (12), this volume of molding being equipped with external water vapor passage filters (24) distributed over this outer surface, which is connected to a first water vapor supply channel (20) passing through the sides (2, 4), **characterized in that** it comprises a core (14) disposed in the molding volume, forming the inner surface of the hollow element (12), which is equipped with internal water vapor filters (34) distributed over this surface interior, connected to a second steam supply channel (30) passing through the core (14).

2. injection mold according to Claim 1, **characterized in that** the molding volume has a cylindrical tubular shape.

3. injection mold according to Claim 2, **characterized in that** the core (14) slides in the mold along the axis of the cylinder.

4. injection mold according to any one of the preceding claims, **characterized in that** the core (14) being mobile, the second supply channel (30) comprises a sliding or telescopic part (38) connecting it to this core (14).

5. Method of using an injection mould, in which after an injection of polystyrene into the molding volume, it carries out a following stage comprising a passage of water vapor from a supply channel (20, 30) towards the other, successively in one direction then in the other direction, **characterized in that** the injection mold is an injection mold according to any one of the preceding claims.

6. Method of use according to claim 5, **characterized in that** it carries out a following step comprising closing drainage valves (26, 36) of the two supply channels (20, 30), then supplying these two channels supply (20, 30) of steam with a rise in pressure.

7. Method of use according to claim 6, **characterized in that** it carries out a following step comprising a supply of cold water to cooling ducts (40) arranged in the various sides of the mold (2, 4).

8. Method of use according to claim 7, **characterized in that** it performs a next step comprising drawing a vacuum in the two supply channels (20, 30) for a stabilization phase of the injected material.
